# EUROPEAN PATENT SPECIFICATION

(11) **EP 3 582 451 B1**
(45) Date of publication and mention of the grant of the patent: **30.12.2020**
(21) Application number: 19171697.6
(22) Date of filing: 20.09.2004
(51) Int. Cl.: G06F 15/02, H04L 12/58, H04M 1/725, H04W 4/14

(54) **HANDHELD ELECTRONIC DEVICE AND ASSOCIATED METHOD PROVIDING TIME DATA IN A MESSAGING ENVIRONMENT**
TRAGBARE ELEKTRONISCHE VORRICHTUNG UND ZUGEHÖRIGES VERFAHREN ZUR BEREITSTELLUNG VON ZEITDATEN IN EINER NACHRICHTENUMGEBUNG
DISPOSITIF ÉLECTRONIQUE PORTATIF ET PROCÉDÉ ASSOCIÉ FOURNISSANT DES DONNÉES DE TEMPS DANS UN ENVIRONNEMENT DE MESSAGERIE

(30) Priority: 19.09.2003 US 504379 P
(43) Date of publication of application: 18.12.2019
(62) Document number(s) of the earlier application(s) in accordance with Art. 76 EPC: 10172832.7 / 2 249 530; 04786633.0 / 1 668 824
(73) Proprietor: BlackBerry Limited, Waterloo, Ontario N2K 0A7 (CA)
(72) Inventor: KLASSEN, Gerhard Dietrich, Waterloo, Ontario N2K 0A7 (CA); WORMALD, Christopher, Waterloo, Ontario N2K 0A7 (CA); KUHL, Lawrence Edward, Waterloo, Ontario N2K 0A7 (CA)
(74) Representative: Hanna Moore + Curley

(56) References cited:
- US-A1- 2003 060 240
- US-A1- 2003 104 841
- US-B1- 6 539 421

## Description

### TECHNICAL FIELD

The invention relates generally to handheld electronic devices and, more particularly, to a handheld electronic device and a method for providing information representative of the times of certain communications in a messaging environment.

### BACKGROUND ART

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable, and thus are relatively small. Many handheld electronic devices also features wireless communication capability, although many such handheld electronic devices are stand-alone devices that are functional without communication with other devices. With advances in technology, handheld electronic devices are being configured to include greater numbers of features while having relatively smaller form factors.

Electronic devices, including handheld electronic devices, are capable of numerous types of communication. One type of communication is "messaging", and one type of messaging is "instant messaging" which enables a first device to send a message on a more or less instantaneous basis to a second device. With most all instant messaging, a given electronic device is provided with an interface that outputs the various communications that have occurred between the electronic device and another electronic device during a messaging "conversation". A sample output on an electronic device that is representative of the various communications that have occurred during a conversation may be as follows:
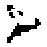 Hi Honey, how was your day?
< Brutal! Larry embarrassed me in front of everybody,
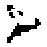 What a Jerk!
< Yeah, but I got him back later with a karate chop! 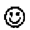
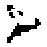 good for you.
In this example, incoming messages are indicated by a greater than ">"mathematical symbol, and outgoing messages are indicated by a less than "<" mathematical symbol. If the conversation continues quickly, i.e., substantially without interruption, the messages do not need a time stamp on them. In the environment of a handheld electronic device, it would be desirable to avoid unnecessary time stamps and other unnecessary output since it occupies too much valuable space on the limited display of the handheld electronic device.

In some messaging circumstances, however, it may be desirable for information regarding certain timing aspects of conversation to be available to a user. Nevertheless, the limited space available on a display of a handheld electronic device has made a solution difficult. It thus would be desirable to provide an improved handheld electronic device and an associated method that provide time data in a messaging environment.

US2003104841A1 relates to a method for displaying time-stamp associated data. A difference between a current data and time and the time-stamp of the time-stamp associated data is calculated. Then, a weight is calculated in accordance with the difference. Finally, the time-stamp associated data is displayed with a display mode which is changed in accordance with the weight.

US6539421B1 relates to a messaging application user interface with an input element for receiving electronic messages and an output element for displaying electronic messages. The messaging application user interface can be implemented so as to maintain a subset of the plurality of potential message recipients, the subset being determined using a predetermined criterion. The messaging application user interface also can be implemented so as to auto-complete a partially entered address based on the subset of potential message recipients. A set of user-selectable signals that modify auto-completion behavior also can be used with the messaging application user interface. The messaging application user interface can be used in an instant messaging system to allow a user to send instant messages to and exchange comments with a plurality of other users without having to switch among several instant message windows.

### DISCLOSURE OF THE INVENTION

Claim 1 defines a method of displaying an instant message conversation on an electronic device. Further, optional, features are defined in the dependent claims.

### BRIEF DESCRIPTION OF THE DRAWINGS

A full understanding of the invention can be gained from the following Description of the Preferred Embodiments when read in conjunction with the accompanying drawings in which:
Fig. 1 is an exemplary top plan view of a handheld electronic device in accordance with the invention which can be used in conjunction with an improved method in accordance with the invention;
Fig. 2 is a schematic view of the handheld electronic device of Fig. 1;
Fig. 3 is a schematic view of the handheld electronic device of Fig. 1 and another device in a messaging environment;
Fig. 4 is an exemplary view of an output provided in accordance an aspect of the method of the invention;
Fig. 5 is another exemplary view of an output provided in accordance an aspect of the method of the invention;
Fig. 6a is another exemplary view of an output provided in accordance an aspect of the method of the invention;
Fig. 6b is another exemplary view of an output provided in accordance an aspect of the method of the invention;
Fig. 7 is another exemplary view of an output provided in accordance an aspect of the method of the invention;
Fig. 8a is another exemplary view of an output provided in accordance an aspect of the method of the invention;
Fig. 8b is another exemplary view of an output provided in accordance an aspect of the method of the invention;
Fig. 9 is another exemplary view of an output provided in accordance an aspect of the method of the invention; and
Fig. 10 is another exemplary view of an output provided in accordance an aspect of the method of the invention.

Similar numerals refer to similar parts to the specification.

### BEST MODE FOR CARRYING OUT THE INVENTION

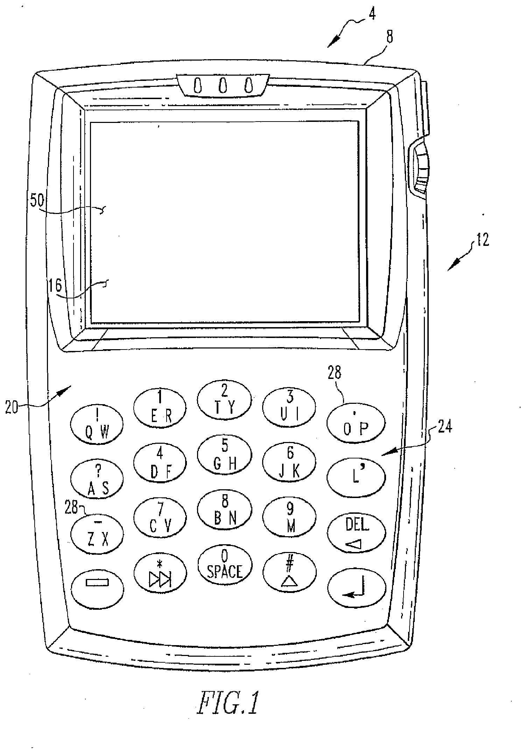

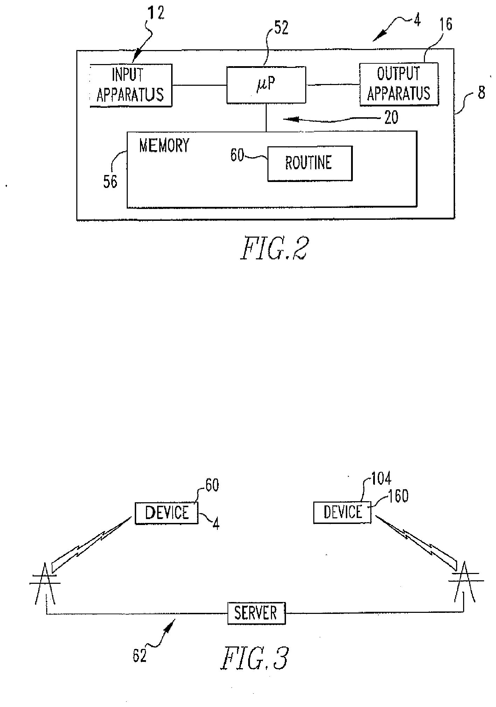

An improved handheld electronic device 4 in accordance with the invention is indicated generally in Fig. 1 and is depicted schematically in Fig. 2. The exemplary handheld electronic device 4 includes a housing 8 upon which are disposed an input apparatus 12, an output apparatus 16 and a processor apparatus 20. The input apparatus 12 includes a keypad 24 that can be said to include a plurality of keys 28.

The output apparatus 16 includes a display 50. The output apparatus 16 can additionally include, for instance, additional indicators such as lights, and the like, and can additionally include an audible output such as a speaker as well as other output devices.

The processor apparatus 20 includes a processor 52 that can be, for instance, and without limitation, a microprocessor (µP), and it is responsive to inputs from the input apparatus 12 and provides output signals to the output apparatus 16. The processor apparatus 20 further includes a memory 56 that includes a routine 60 stored therein. The exemplary routine 60 is a messaging routine that can provide a messaging capability on the device 4. It is understood that the memory 56 likely includes a number of other routines that are not expressly mentioned herein. As employed herein, the expression "a number of" and variations thereof shall refer broadly to any nonzero quantity including a quantity of one. The processor 52 interfaces with the memory 56, and the routine 60 is executable on the processor 52.

The device 4 further includes a wireless communication system. As can be seen in Fig. 3, the device 4 with the routine 60 can interface with a messaging service 62 to wirelessly provide the messaging capability on the device 4. In the depicted exemplary embodiment, the messaging service 62 provides an instant messaging capability on the device 4 and on the other electronic devices having routines that are subscribers to the messaging service 62. The messaging service 62 is schematically depicted as including a server, although the teachings herein are not limited to messaging services that employ a server, For instance, the messaging service could, for example, provide a point-to-point communication capability such as is provided with the Bluetooth protocol, or may provide some other type of communication capability, whether or not wireless.

Fig. 3 further depicts another device 104 as being a device having a routine that is another subscriber to the messaging service 62. Specifically, the device 104 is an electronic device having a routine 160 thereon which can communicate with the messaging service 62 to provide a messaging capability on the device 104. While the exemplary devices 4 and 104 are depicted as having a wireless connection with the messaging service 62, it is understood that either or both of the devices 4 and 104 may employ a non-wireless communication capability and still not depart from the concept of the invention. It is further understood that while only the two devices 4 and 104 are depicted in Fig. 3 as being subscribers to the messaging service 62, many more subscribers to the messaging service 62 may exist but are not expressly depicted in Fig. 3.

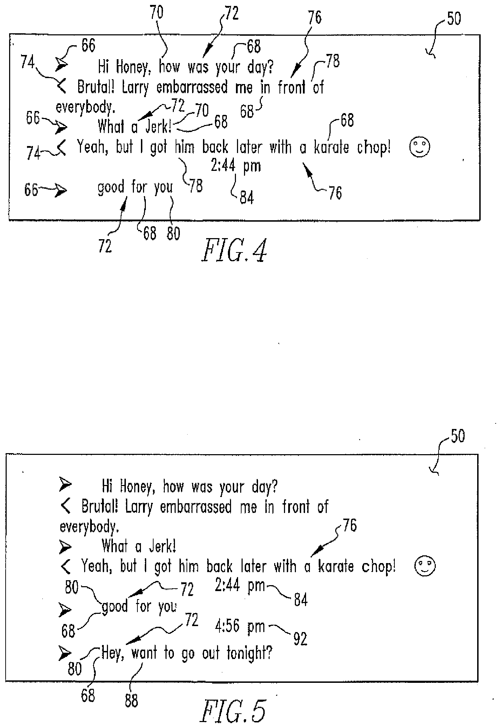

During the course of an electronic conversation, such as depicted in Fig. 4 between, for instance, the devices 4 and 104, a number of messages 68 are communicated between the devices 4 and 104. An incoming message 72 received on, for instance, the device 4, provides a visual indication of a communication that has been transmitted from, for instance, the device 104 to the device 4. As can be seen in Fig. 4, an incoming message 72 includes an incoming symbol 66 and an incoming text portion 70. In the exemplary output depicted herein, the incoming symbol 66 is a mathematical greater than ">" symbol. The text portion 70 is an exemplary linguistic output that could be of numerous types of forms, such as in different languages, and also can include, for instance, symbols and the like that need not necessarily be a part of any particular language.

An outgoing message 76 is depicted as including an outgoing symbol 74 and an outgoing text portion 78, In the exemplary output depicted herein, the outgoing symbol 74 is a mathematical less than "<" symbol. The text portion 78 is an exemplary linguistic output that could be of numerous types of forms.

As can be further seen from Fig, 4, the exemplary conversation depicted therein includes a plurality of incoming messages 72 and a plurality of outgoing messages 76 that are transmitted between the devices 4 and 104 at a conversational speed, i.e., at a speed in which back-to-back communications between the devices 4 and 104 occur without a meaningful delay therebetween. Due to the conversational speed of the back-to-back communications, the messages 68 do not include an indications of the times at which such messages 68 were transmitted, it being assumed as a general matter that in such circumstances the specific time at which a given message within such a conversation occurred may not be of significance to a user.

At a certain point in the exemplary conversation, though, an exemplary message 68 which, for example, maybe an outgoing message 76, may also become a non-responded to message 80, meaning that subsequent to its transmission substantially no additional communication occurs between the device 4 and 104 within a predetermined duration of time. More specifically, as the conversation transpires, the back-to-back incoming messages 72 and outgoing messages 76 are displayed adjacent one another. However, after the expiration of a predetermined duration of time after the transmission of a message 68, for instance ten minutes, in which substantially no additional communication occurs between the device 4 and 104, the message 68 is determined in accordance with the invention to be a non-responded to message 80, and responsive to such determination a first time stamp 84 is output adjacent the non-responded to message 80. For instance, if the non-responded to message 80 was transmitted at 2:44 PM, and if substantially no additional communication between the device 4 and 104 occurs between 2:44 PM and 2:54 PM, at 2:54 PM the first time stamp 84 "2:44 pm" is output to provide to the users of the devices 4 and 104 an indication that the conversation was interrupted at 2:44 PM. Such selective outputting of the first time stamp 84 generally only in response to a message 68 of some significance, such as the terminal message of a conversation, saves space on the display 50. It is noted that the display of the first time stamp 84 typically will occur on both the device 4 and the device 104.

It is understood, however, that the time duration of ten minutes is completely exemplary and that the time duration could be set at any duration. It is also understood that the first time stamp 84 can be output in response to the occurrence of additional and/or other predetermined events. Moreover, it is noted that the predetermined time duration may be variable depending upon the characteristics of the conversation. For instance, if messages are being exchanged on a more infrequent basis, such as every nine minutes, the predetermined duration of time after which the first time stamp 84 is output may be adjusted to be twenty minutes, for example.

By way of further example, and as is depicted generally in Fig. 5, another message 68 may subsequently be communicated between the devices 4 and 104. Since the message 68 corresponds with a resumption of communication between the devices 4 and 104 after a period of interruption, the message 68 is determined to be a resumption message 88, and a second time stamp 92 is output adjacent the resumption message 88. A user thus can determine from the output on the display 50 the period of time during which the conversation was suspended, i.e., the time between transmission of the non-responded to message 80 and transmission of the resumption message 88. Selective outputting of the second time stamp 92 saves space on the display 50. In this depicted example, the first time stamp 84 is disposed, for example, adjacent the non-responded to message 80, and the second time stamp 92 is disposed, for example, adjacent the resumption message 88. It is also noted that the second time stamp 92 is disposed, for example, between the non-responded to message 80 and the resumption message 88.

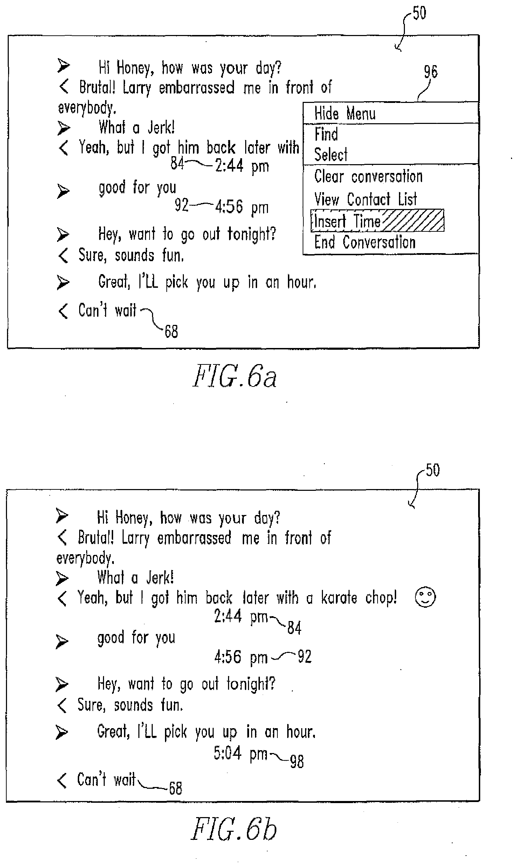

As the conversation continues after transmission of the resumption message 88, one of the users of the devices 4 and 104 may determine that a time stamp would desirably be displayed in association with a message 68, such as if the user wished to emphasize to himself or herself, or to the other user, the time at which the message 68 was transmitted. If such a time stamp is desired, the user may active a user interface 96, such as the exemplary user interface 96 of Fig. 6a, which can manually cause the output of an inserted time stamp 98 adjacent the message 68, as in Fig. 6b. As mentioned above, the inserted time stamp 98 can be made to appear on both the device 4 and the device 104, and it is also noted that, if desired, the inserted time stamp 98 could be made to appear on only one or the other of the devices 4 and 104.

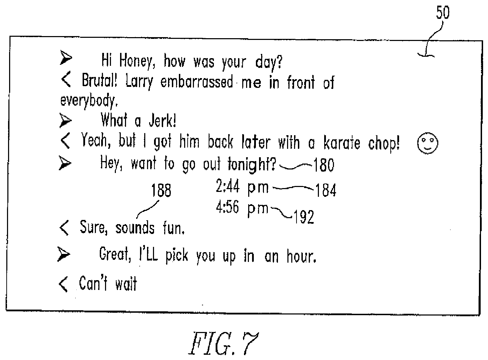

As can be seen in Fig. 7, the output could provide a non-responded to message 180 and a resumption message 188, with a first time stamp 184 being disposed adjacent the non-responded to message 180, and with a second time stamp 192 being disposed adjacent the resumption message 188, However, in the exemplary output of Fig. 7 the first time stamp 184 and the second time stamp 192 are disposed adjacent one another and are both disposed between the non-responded to message 180 and the resumption message 188. Such an exemplary display of the first and second time stamps 184 and 192 illustrates the gap in the conversation that occurred between transmission of the non-responded to message 180 and transmission of the resumption message 188. It is noted that the first time stamp 184 and the second time stamp 192 may have been generated in a fashion similar to the generation of the first time stamp 84 and the second time stamp 92.

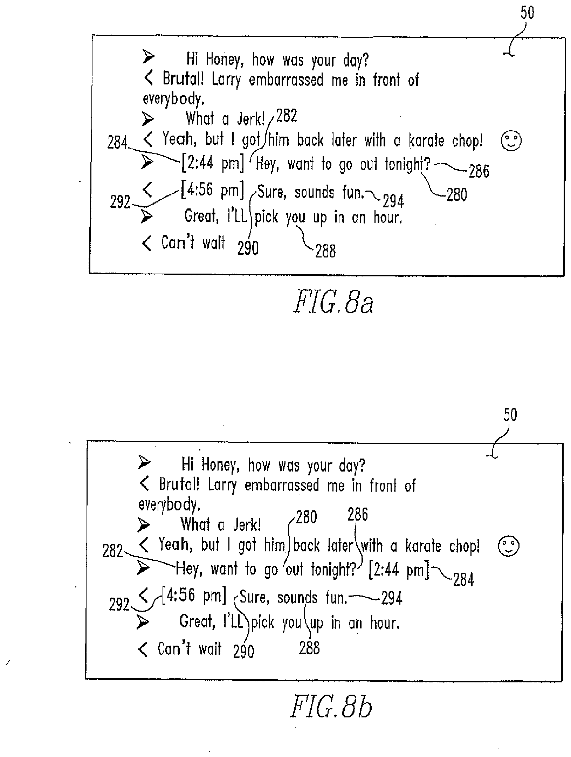

As can be seen in Figs. 8a and 8b, the time stamps can be output in other places. For instance, a text portion of a non-responded to message 280 may have a beginning 282 and an ending 286. Similarly, a text portion of a resumption message 288 may have a beginning 290 and an ending 294. In accordance with another aspect of the invention, a first time stamp 284 can be output at either the beginning 282 or the ending 286 of the text portion of the non-responded to message 280, and in the example of Fig. 8a the exemplary first time stamp 284 is output at the beginning 282. Also, a second time stamp 292 can be output at either the beginning 290 or the ending 294 of the text portion of the resumption message 288, and in the example of Fig. 8a the exemplary second time stamp 292 is output at the beginning 290. Other positioning of the first time stamp 284 and the second time stamp 292 are possible within the concept of the invention.

For instance, and as another example, Fig. 8b depicts the exemplary first time stamp 284 as being output at the ending 286 while the exemplary second time stamp 292 is output at the beginning 290. Figs, 8a and 8b depict different exemplary ways in which the first and second time stamps 284 and 292 can be output to provide time data to a user. In Fig. 8a the first and second time stamps 284 and 292 are disposed at a consistent location, i.e., at the beginnings 282 and 290 of the text portions of the non-responded to message 280 and the resumption message 288. Fig. 8b disposes the first and second time stamps 284 and 292 generally between the ending 286 of the non-responded to message 280 and the beginning 290 of the resumption message 288, which focuses the attention of the user on the interval during which the conversation was interrupted. Other ways of outputting the first and second time stamps 284 and 292 will be apparent.

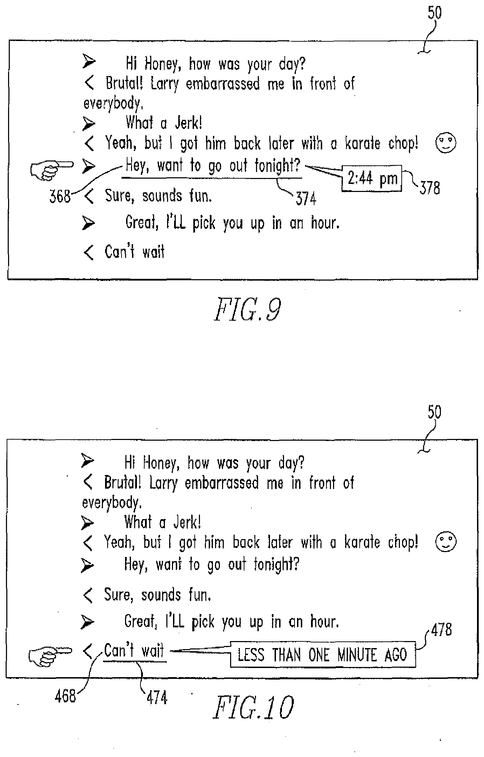

Another way of providing time stamps in a fashion that saves space on the display 50 is depicted in Fig. 9. Specifically, the messages 368 are output without displayed time stamps, but upon moving a cursor 374 or other pointing device or other device in proximity to a given message 368 a corresponding requested time stamp is output adjacent the message 368. In this way, the messages 368 can be provided without also displaying time stamps, but if a time stamp is desired as to any of the messages 368 a requested time stamp 378 can be readily output. In this regard, the requested time stamp 378 may be output for only a predetermined duration of time, for instance a few seconds, and/or the requested time stamp 378 may be deleted from the display 50 upon a detection of another input, such as from the input apparatus 12 or otherwise. In this regard, all of the messages 368 can have time stamps associated therewith that are not displayed until requested.

It is also noted that the requested time stamp 378 need not be requested by the cursor 374, and rather could be requested with virtually any other type of input desired, such as with a stylus and a touch sensitive screen, by an actuation of a key, or by the use of alternate pointing or other devices. Other ways of managing the output of the requested time stamp 378 as to any of the messages 368 will be apparent.

It is noted that the appearances of the various time stamps herein is completely exemplary, and that the time stamps could be provided in any format without departing from the concept of the invention. In this regard, and in accordance with another aspect of the invention, a given time stamp may be a smart time stamp and provide additional information depending upon the prevailing circumstances. For instance, if the first time stamp 84 of Fig. 4 was output as indicated above, and if the conversation was not resumed until the following day, the first time stamp 84 potentially could be configured to automatically change from being displayed as "2:44 pm" on the day of communication of the non-responded to message 80 to being displayed as, for instance, "2:44 pm Thursday" or, for instance, "2:44 PM September 17, 2004" or, for instance, "2:44 pm yesterday" on the following day, although other configurations will be apparent and will be within the concept of the invention.

Further in this regard, the time stamps can be configured to depict relative times, i.e., elapsed times, rather than absolute times. For instance, and as is depicted generally in Fig. 10, a time stamp 478 associated with a message 468 can be output to say, for example, "less than one minute ago", meaning that the message 468 that has been activated by the cursor 474 has been transmitted less than one minute prior to the current time.

Such a time stamp 478 could be configured to be an active time stamp, meaning that it would change as time progressed. For instance, the time stamp 478 could progressively change from saying "less than one minute ago" to saying "one minute ago", "two minutes ago", "forty-five minutes ago", and the like as time progressed, Such a time stamp also could be configured, for instance, to revert back to displaying an absolute time after the expiration of a given time duration. For example, once the message 468 is one hour old, for instance, the time stamp 478 might be configured to no longer output a relative time such as "fifty-nine minutes ago", and rather to output an absolute time such as "2:54 pm". Other variations can be provided without departing from the concept of the invention.

If it is desired to provide such time stamps that output relative times, it might also be desirable to output such time stamps in any of the fashions set forth above, and such time stamps potentially could be configured to be output without first detecting a delay or a break in the "conversation". For instance, the time stamp "less than a minute ago" could be displayed immediately upon receiving a message on the handheld electronic device 4, if such a configuration is desired. In such a configuration, and order to save space on the display 50, the handheld electronic device 4 may be configured to provide such a relative time stamp only for the most recently transmitted message. That is, responsive to detecting the transmission of a message, the handheld electronic device may be configured to substantially immediately output a time stamp such as "less than a minute ago". After one minute the time stamp may be altered to say "one minute ago", and the like. However, upon the transmission of an additional message, the time stamp for the prior message can be deleted and a new time stamp such as "less than a minute ago" can be provided with respect to the new message.

Such relative time stamps provide to the user an expedited understanding of the timing aspects of the message. That is, the user can understand an aspect of the time of transmission without having to refer to the current time. This advantageously saves effort by the user because it eliminates the mental step of determining the current time and subtracting therefrom an absolute time displayed by a time stamp to determine the elapsed time since transmission of the message.

The different fashions of selectively providing intelligent time data in the form of selectively output time stamps advantageously saves valuable space on the display 50, Moreover, such selective outputting of time stamps advantageously avoids unnecessary visual clutter on the display 50.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the claims appended.

## Claims

1. A method of displaying an instant message conversation on an electronic device (4), the instant message conversation comprising a plurality of instant messages sequentially exchanged between the electronic device and a second electronic device (104), the method comprising:
communicating a first instant message (78) at a first time between the electronic device and the second electronic device;
displaying at least a portion of the first instant message on a display (50) of the electronic device;
selectively displaying a time stamp indicative of a time for the first message (84) on the display of the electronic device;
communicating a second instant message (80) between the electronic device and the second electronic device at a second time, the second instant message being a sequential next message in the instant messaging conversation after the first message;
displaying at least a portion of the second instant message (92) on the display of the electronic device; and
selectively displaying a time stamp indicative of a time for the second message (92) on the display of the electronic device,
wherein selectively displaying the time stamp indicative of the time for the second message depends on the time period between the time of communication of the first instant message and the time of communication of the second instant message, and
wherein in response to determining that the time period is less than a predetermined duration of time not providing a time stamp for both the first message and the second message.

2. The method of claim 1, wherein the predetermined time duration is variable based on the characteristics of the instant message conversation.

3. The method of claim 1, wherein selectively displaying the time stamp indicative of the time for the second message depends on detecting a predetermined input to display the time stamp.

4. The method of any preceding claim, wherein the time stamp indicative of a time for the second message is displayed adjacent to the second message.

5. The method of any preceding claim, wherein the time stamp is configured to provide additional information.

6. The method of any preceding claim, wherein the time stamp is configured to depict an elapsed time with respect to the current time (478).

7. The method of claim 6, wherein the elapsed time stamp changes as time progresses.

8. The method of claim 6 or claim 7, wherein the elapsed time stamp providing an elapsed time reverts back to displaying an absolute time indicative of the time of communication of the second message.

9. The method of any preceding claim, wherein the time stamp indicative of the time for the second message is displayed substantially immediately adjacent to the indication of the second message.

10. The method of claim 9, wherein selectively displaying a time stamp indicative of a time for the second message comprises:
upon transmission of an additional message, deleting the time stamp adjacent to the indication of the second message; and
displaying a new time stamp indicative of the time of communication of the additional message.

11. The method of claim 10, wherein the time stamp adjacent to the indication of the second message is deleted in response to detecting the transmission of the additional message occurs within a predetermined time period of the second message.

12. A memory (56) storing a routine (60), the routine (60) comprising instructions which, when executed by a processor of an electronic device cause the processor to carry out the steps of the method according to any one of the preceding claims.

13. An electronic device (4, 104) comprising a processor (52) and the memory (56) according to claim 12.

## Patentansprüche

1. Verfahren zum Anzeigen einer Sofortnachrichtkonversation auf einer elektronischen Vorrichtung (4), wobei die Sofortnachrichtkonversation mehrere Sofortnachrichten umfasst, die zwischen der elektronischen Vorrichtung und einer zweiten elektronischen Vorrichtung (104) sequentiell ausgetauscht werden, wobei das Verfahren Folgendes umfasst:
Übermitteln einer ersten Sofortnachricht (78) zu einem ersten Zeitpunkt zwischen der elektronischen Vorrichtung und der zweiten elektronischen Vorrichtung;
Anzeigen wenigstens eines Abschnitts der ersten Sofortnachricht auf einer Anzeige (50) der elektronischen Vorrichtung;
wahlweises Anzeigen eines Zeitstempels, der einen Zeitpunkt für die erste Nachricht (84) auf der Anzeige der elektronischen Vorrichtung angibt;
Übermitteln einer zweiten Sofortnachricht (80) zwischen der elektronischen Vorrichtung und der zweiten elektronischen Vorrichtung zu einem zweiten Zeitpunkt, wobei die zweite Sofortnachricht eine sequentielle nächste Nachricht in der Sofortnachrichtkonversation nach der ersten Nachricht ist;
Anzeigen wenigstens eines Abschnitts der zweiten Sofortnachricht (92) auf der Anzeige der elektronischen Vorrichtung; und
wahlweises Anzeigen eines Zeitstempels, der einen Zeitpunkt für die zweite Nachricht (92) auf der Anzeige der elektronischen Vorrichtung angibt,
wobei das wahlweise Anzeigen des Zeitstempels, der den Zeitpunkt für die zweite Nachricht angibt, von der Zeitspanne zwischen dem Zeitpunkt der Kommunikation der ersten Sofortnachricht und dem Zeitpunkt der Kommunikation der zweiten Sofortnachricht abhängt, und
wobei als Reaktion auf ein Bestimmen, dass die Zeitspanne kleiner als eine zuvor bestimmte Zeitdauer ist, kein Zeitstempel sowohl für die erste Nachricht als auch für die zweite Nachricht bereitgestellt wird.

2. Verfahren nach Anspruch 1, wobei die zuvor bestimmte Zeitdauer basierend auf den Merkmalen der Sofortnachrichtkonversation variabel ist.

3. Verfahren nach Anspruch 1, wobei das wahlweise Anzeigen des Zeitstempels, der den Zeitpunkt für die zweite Nachricht angibt, von einem Erfassen einer zuvor bestimmten Eingabe, um den Zeitstempel anzuzeigen, abhängt.

4. Verfahren nach einem vorhergehenden Anspruch, wobei der Zeitstempel, der einen Zeitpunkt für die zweite Nachricht angibt, angrenzend an die zweite Nachricht angezeigt wird.

5. Verfahren nach einem vorhergehenden Anspruch, wobei der Zeitstempel konfiguriert ist, um zusätzliche Informationen bereitzustellen.

6. Verfahren nach einem vorhergehenden Anspruch, wobei der Zeitstempel konfiguriert ist, um eine verstrichene Zeit hinsichtlich der aktuellen Zeit (478) darzustellen.

7. Verfahren nach Anspruch 6, wobei sich der Stempel der verstrichenen Zeit mit fortschreitender Zeit ändert.

8. Verfahren nach Anspruch 6 oder 7, wobei der Stempel der verstrichenen Zeit, der eine verstrichene Zeit bereitstellt, zu dem Anzeigen einer absoluten Zeit zurückkehrt, die den Zeitpunkt der Kommunikation der zweiten Nachricht angibt.

9. Verfahren nach einem vorhergehenden Anspruch, wobei der Zeitstempel, der den Zeitpunkt für die zweite Nachricht angibt, im Wesentlichen unmittelbar angrenzend an die Angabe der zweiten Nachricht angezeigt wird.

10. Verfahren nach Anspruch 9, wobei das wahlweise Anzeigen eines Zeitstempels, der einen Zeitpunkt für die zweite Nachricht angibt, Folgendes umfasst:
nach Übertragung einer zusätzlichen Nachricht, Löschen des Zeitstempels angrenzend an die Angabe der zweiten Nachricht; und
Anzeigen eines neuen Zeitstempels, der den Zeitpunkt der Kommunikation der zusätzlichen Nachricht angibt.

11. Verfahren nach Anspruch 10, wobei der Zeitstempel angrenzend an die Angabe der zweiten Nachricht als Reaktion auf das Erfassen, dass die Übertragung der zusätzlichen Nachricht innerhalb einer zuvor bestimmten Zeitspanne der zweiten Nachricht auftritt, gelöscht wird.

12. Speicher (56), der eine Routine (60) speichert, wobei die Routine (60) Anweisungen umfasst, die, wenn sie durch einen Prozessor einer elektronischen Vorrichtung ausgeführt werden, den Prozessor veranlassen, die Schritte des Verfahrens nach einem der vorhergehenden Ansprüche durchzuführen.

13. Elektronische Vorrichtung (4, 104), die einen Prozessor (52) und den Speicher (56) nach Anspruch 12 umfasst.

## Revendications

1. Procédé d'affichage d'une conversation par messages instantanés sur un dispositif électronique (4), la conversation par messages instantanés comprenant une pluralité de messages instantanés échangés de manière séquentielle entre le dispositif électronique et un second dispositif électronique (104), le procédé comprenant :
la communication d'un premier message instantané (78) dans un premier temps entre le dispositif électronique et le second dispositif électronique ;
l'affichage d'au moins une partie du premier message instantané sur un affichage (50) du dispositif électronique ;
l'affichage de manière sélective d'une référence temporelle indiquant une heure du premier message (84) sur l'affichage du dispositif électronique ;
la communication d'un second message instantané (80) entre le dispositif électronique et le second dispositif électronique dans un second temps, le second message instantané étant un message séquentiel suivant dans la conversation par messages instantanés après le premier message ;
l'affichage d'au moins une partie du second message instantané (92) sur l'affichage du dispositif électronique ; et
l'affichage de manière sélective d'une référence temporelle indiquant une heure du second message (92) sur l'affichage du dispositif électronique, dans lequel l'affichage de manière sélective de la référence temporelle indiquant l'heure du second message dépend du laps de temps entre l'heure de communication du premier message instantané et l'heure de communication du second message instantané, et dans lequel, en réponse au fait d'avoir déterminé que le laps de temps est inférieur à une durée prédéterminée,une référence temporelle n'est pas fournie pour les premier et second messages.

2. Procédé selon la revendication 1, dans lequel la durée prédéterminée est variable en fonction des caractéristiques de la conversation par messages instantanés.

3. Procédé selon la revendication 1, dans lequel l'affichage de manière sélective de la référence temporelle indiquant l'heure du second message dépend de la détection d'une entrée prédéterminée pour afficher la référence temporelle.

4. Procédé selon l'une quelconque des revendications précédentes, dans lequel la référence temporelle indiquant une heure pour le second message est affichée adjacent au second message.

5. Procédé selon l'une quelconque des revendications précédentes, dans lequel la référence temporelle est configurée pour fournir des informations supplémentaires.

6. Procédé selon l'une quelconque des revendications précédentes, dans lequel la référence temporelle est configurée pour représenter un laps de temps écoulé par rapport à l'heure actuelle (478).

7. Procédé selon la revendication 6, dans lequel la référence temporelle du laps de temps écoulé change au fur et à mesure du temps.

8. Procédé selon la revendication 6 ou la revendication 7, dans lequel la référence temporelle du laps de temps écoulé fournissant un laps de temps écoulé retourne à un affichage d'un temps absolu indiquant l'heure de communication du second message.

9. Procédé selon l'une quelconque des revendications précédentes, dans lequel la référence temporelle indiquant l'heure du second message est affichée sensiblement immédiatement adjacente à la mention du second message.

10. Procédé selon la revendication 9, dans lequel l'affichage de manière sélective d'une référence temporelle indiquant une heure du second message comprend :
lors de la transmission d'un message supplémentaire, la suppression de la référence temporelle adjacente à la mention du second message ; et
l'affichage d'une nouvelle référence temporelle indiquant l'heure de communication du message supplémentaire.

11. Procédé selon la revendication 10, dans lequel la référence temporelle adjacente à la mention du second message est supprimée en réponse à la détection de la transmission du message supplémentaire qui se produit pendant un laps de temps prédéterminé du second message.

12. Mémoire (56) stockant une routine (60), la routine (60) comprenant des instructions qui, lorsqu'elles sont exécutées par un processeur d'un dispositif électronique, amènent le processeur à exécuter les étapes du procédé selon l'une quelconque des revendications précédentes.

13. Dispositif électronique (4, 104) comprenant un processeur (52) et la mémoire (56) selon la revendication 12.
